# EUROPÄISCHE PATENTANMELDUNG

(11) **EP 3 702 659 A1**
(43) Veröffentlichungstag der Anmeldung: **02.09.2020**
(21) Anmeldenummer: 20157968.7
(22) Anmeldetag: 18.02.2020
(51) Int. Cl.: F16L 33/30, A47L 15/42, E03D 1/00, F16L 41/02, F16L 41/03, F16L 43/00, F16L 25/14, E03F 3/04

(54) **ABWASSERROHRANSCHLUSS FÜR DEN GLEICHZEITIGEN ANSCHLUSS VON WENIGSTENS ZWEI, BEVORZUGT GENAU ZWEI ABWASSER FÜHRENDEN GERÄTEN**

(30) Priorität: 26.02.2019 DE 102019104869
(71) Anmelder: Zimmermann, Philipp, 53894 Mechernich NRW (DE)
(72) Erfinder: Zimmermann, Philipp, 53894 Mechernich NRW (DE)
(74) Vertreter: Cohausz Hannig Borkowski Wißgott

(57) **Zusammenfassung**

Die Erfindung betrifft ein Abwasserrohranschlußstück für den gleichzeitigen Anschluss von wenigstens zwei, bevorzugt genau zwei Abwasser führenden Geräten an dasselbe Abwasserrohr umfassend ein Rohrelement (1), welches ablaufseitig einen an das anzuschließende Abwasserrohr angepassten Rohranschluss aufweist, insbesondere einen Rohrstutzen aufweist, der in ein Muffenende eines Abwasserrohres einsteckbar ist, und welches einlaufseitig wenigstens zwei, bevorzugt genau zwei Schlauchanschlussstutzen (3a, 3b) aufweist, insbesondere für verschiedene Schlauchdurchmesser, wobei die Längserstreckungsrichtung (M3a, M3b) aller Schlauchanschlussstutzen (3a, 3b), insbesondere der genau zwei Schlauchanschlussstutzen (3a, 3b), jeweils zumindest im Wesentlichen, insbesondere genau senkrecht zur Rohrerstreckungsachse (M) des Rohrelementes (1) ausgerichtet ist.

## Beschreibung

Die Erfindung betrifft ein Abwasserrohranschlussstück für den gleichzeitigen Anschluss von wenigstens zwei, bevorzugt genau zwei Abwasser führenden Geräten an dasselbe Abwasserrohr umfassend ein Rohrelement, welches ablaufseitig einen an das anzuschließende Abwasserrohr angepassten Rohranschluss aufweist und welches einlaufseitig wenigstens zwei, bevorzugt genau zwei Schlauchanschlussstutzen aufweist, insbesondere für verschiedene Schlauchdurchmesser. Der an das Abwasserrohr angepasste Rohranschluss kann dabei z.B. als ein Rohrstutzen ausgebildet sein, der in ein Muffenende eines Abwasserrohres einsteckbar ist.

Im Stand der Technik sind solche Abwasserrohranschlussstücke bekannt, die zwei parallel verlaufende Schlauchanschlussstutzen aufweisen, welche sich in der Richtung des Rohrelementes erstrecken und von einer Stirnwand, die das Rohrelement verschließt, nach vorne vorspringen.

Solche Abwasserrohranschlussstücke dienen dazu z.B. eine Waschmaschine und einen Kondenswasser erzeugenden Trockner oder auch z.B. eine Waschmaschine und eine Spülmaschine gleichzeitig an ein Abwasserrohr anzuschließen. Solche Abwasserrohre liegen häufig, zumindest in Deutschland, mit einem offenen Muffenende, beispielsweise mit einer Nennweite von DN50 oder DN40 in einer Wand vor, z.B. unterhalb einer Arbeitsplatte.

Würde man das genannte bekannte Abwasserrohranschlussstück, in ein solches Muffenende einstecken, so könnte man zwar prinzipiell zwei Geräte hieran anschließen, häufig reicht aber der dann benötigte Bauraum nicht aus. So werden Waschmaschinen, Trockner oder Spülmaschinen häufig auch unterhalb von Arbeitsplatten installiert, die typischerweise eine Tiefe von nur 60 bis 65 cm aufweisen. Die Enden der Schlauchanschlussstutzen eines solchen bekannten Abwasserrohranschlussstücks würden aber so weit von der Wand vorstehen, dass ein Gerät mit seiner vorhandenen Bautiefe dann nicht mehr vollständig unter die Arbeitsplatte geschoben werden kann.

Bisherige Lösungen dieses Problem können vorsehen, zunächst vor der Wand einen Siphon zu installieren, mit dem auch die Installationsrichtung des Abwasserrohranschlussstücks in eine Richtung parallel zur Wand geändert werden kann. Solche Siphons sind aber bei den meisten Geräten gar nicht nötig, da diese es ohnehin nicht zulassen, dass Abwassergerüche aus der Kanalisation durch das Gerät nach außen entweichen.

Es ist somit eine Aufgabe der Erfindung ein Abwasserrohranschlussstück der eingangs genannten Art bereit zu stellen, das mit deutlich weniger Bauraum auskommt.

Diese Aufgabe wird dadurch gelöst, dass die Längserstreckungsrichtung aller Schlauchanschlussstutzen, insbesondere der genau zwei Schlauchanschlussstutzen, jeweils zumindest im Wesentlichen, insbesondere genau senkrecht zur Rohrerstreckungsachse des Rohrelementes ausgerichtet ist. Bevorzugt wird unter zumindest im Wesentlichen senkrecht eine maximale Abweichung von plus / minus 5 Grad von der Senkrechten, weiter bevorzugt von maximal plus / minus 3 Grad verstanden.

Hierdurch wird der benötigte Bauraum reduziert, da die Schlauchanschlussstutzen bei einer z.B. vorgesehenen Installation durch Einstecken des Abwasserrohranschlussstücks in das Abwasserrohr, bevorzugt dessen Muffenende in einer Wand bei dieser Anordnung die Schlauchanschlussstutzen nicht mehr senkrecht zur Wandebene verlaufen und damit der Abstand zwischen der Wand und den Stutzenenden reduziert werden kann.

Bevorzugt ist bei der Erfindung das Abwasserrohranschlussstück als ein einstückiges Element ausgebildet, insbesondere also ohne Schraubverbindungen zwischen den Elementen. Das Abwasserrohranschlussstück kann z.B. als Spritzgusselement gebildet sein.

So kann nämlich erzielt werden, dass bei Montage des erfindungsgemäßen Abwasserrohranschlussstückes mit der Rohrerstreckungsrichtung seines Rohrelementes senkrecht zu einer Wand, in der ein Abwasserrohrende liegt, die Längserstreckungsrichtung der Schlauchanschlussstutzen jeweils zumindest im Wesentlichen, insbesondere genau parallel zur Wandoberfläche orientiert ist. In diesem Fall ist der benötigte Bauraum gänzlichst unabhängig von der Länge der Erstreckung der Schlauchanschlussstutzen.

So kann der benötigte Bauraum, somit die Weite, die das montierte Abwasserrohranschlussstück von einer Wand vorsteht, maximal reduziert werden, z.B. auf Werte kleiner als 5cm, oder allgemein auf Werte kleiner als das Doppelte der Durchmesser aufzusteckender Schläuche.

Die Erfindung kann grundsätzlich eine beliebige Anzahl von Schlauchanschlussstutzen am Rohrelement vorsehen, bevorzugt ist die Anzahl jedoch kleiner gleich drei und besonders bevorzugt ist die Anzahl der Schlauchanschlussstutzen gleich zwei.

Die Erfindung kann in einer ersten bevorzugten Ausführung vorsehen, dass die Schlauchanschlussstutzen jeweils separat in das Innere des Rohrelementes münden. So werden hierbei die Medienströme erst im Inneren des Rohrelementes zusammengeführt. Eine zweite bevorzugte Ausführung kann auch vorsehen, dass die Schlauchanschlussstutzen zu einem gemeinsamen Verbindungselement zusammengefasst sind und das gemeinsame Verbindungselement in das Innere des Rohrelementes mündet. Beispielsweise können die Schlauchanschlussstutzen mit dem gemeinsamen Verbindungselement eine Y-Konfiguration oder auch eine T-Konfiguration bilden.

Die Längserstreckungsrichtungen der Schlauchanschlussstutzen, also von den wenigstens zwei Stutzen kann grundsätzlich beliebig sein, bevorzugt sieht die Erfindung hingegen vor, dass die Längserstreckungsrichtungen parallel zueinander orientiert sind. Dies ist besonders bevorzugt in der Ausführung, in welcher die Schlauchanschlussstutzen jeweils separat in das Rohranschlussstück münden, kann jedoch auch vorgesehen sein, wenn die Schlauchanschlussstutzen vor der Einmündung in einem gemeinsamen Verbindungselement zusammengeführt sind.

Dabei kann es bevorzugt vorgesehen sein, dass sich die Schlauchanschlussstutzen vom Rohrelement in dieselbe Richtung wegerstrecken. So können die Schläuche der Geräte besonders bequem, z.B. von unten kommend parallel liegend an das erfindungsgemäße Abwasserrohranschlussstück angeschlossen werden. Es kann aber auch vorgesehen sein, dass zwei Schlauchanschlussstutzen sich vom Rohrelement in entgegengesetzte Richtungen wegerstrecken.

Die Längserstreckungsrichtungen der Schlauchanschlussstutzen, insbesondere von genau zwei Schlauchanschlussstutzen können in einer möglichen Ausführung auch nicht-parallel zueinander orientiert sein, insbesondere in einem Winkel zueinander von kleiner gleich 90 Grad. Z.B. kann so besonders bequem ein Schlauch von unten kommend und ein Schlauch seitlich kommend angeschlossen werden. Diese Ausführung kann sowohl vorgesehen sein, wenn die Schlauchanschlussstutzen jeweils separat in das Rohrelement münden als auch wenn diese über ein gemeinsames Verbindungselement in das Rohrelement münden. Eine besonders Bauraum sparende Ausführung kann z.B. vorsehen, dass die Schlauchanschlussstutzen jeweils oder nach einer Zusammenführung in ein gemeinsames Verbindungselement dieses Verbindungselement durch die zylindrische Mantelfläche des Rohrelementes hindurch in das Innere des Rohrelementes münden. Bei dieser Ausführung stehen bevorzugt die Schlauchstutzen und besonders auch daran montierte Schläuche vollständig hinter einer Stirnwand des Abwasserrohranschlussstücks zurück, welche das Rohrelement einlaufseitig verschließt, so dass die Stirnwand den Bereich definiert, der am weitesten von einer Wand vorsteht.

Die Erfindung kann grundsätzlich vorsehen, dass die Mittenachsen der Schlauchanschlussstutzen von einer einlaufseitigen Stirnwand gleich beabstandet sind. Insbesondere bei Schlauchanschlussstutzen für im Durchmesser verschiedene Schläuche kann es vorgesehen sein, dass die Mittenachsen der Schlauchanschlussstutzen von einer einlaufseitigen Stirnwand des Rohrelementes, die das Rohrelement einlaufseitig verschließt, unterschiedlich beabstandet sind.

Dabei kann beispielsweise die unterschiedliche Beabstandung so gewählt sein, dass die äußeren vom ablaufseitigen Ende des Rohrelementes abgewandeten Mantelflächen von auf die Schlauchstutzen aufgeschobenen Schläuchen zumindest im Wesentlichen in derselben Ebene liegen.

Häufig wird die Ausführung so sein, dass die Mittenachsen einen Abstand zueinander haben, der kleiner ist als der Durchmesser des Rohrelementes abzüglich der Radien der Schlauchanschlussstutzen.

Die Erfindung kann aber auch vorsehen, dass die vom Rohrelement nach außen weisenden Mantelflächenbereiche von zwei zueinander parallelen Schlauchstutzen, insbesondere die jeweils separat in das Rohrelement münden, im Bereich der Einmündung der Schlauchstutzen in das Rohrelement oder in das gemeinsame Verbindungselement einen Abstand aufweisen, der größer ist, als der Durchmesser des Rohrelementes. Dies kann auch so ausgeführt sein, dass die Mittenachsen von zwei zueinander parallelen Schlauchstutzen einen Abstand zueinander aufweisen, der gleich oder größer ist als der Außendurchmesser des Rohrelementes. Hierdurch kann, z.B. wenn es die spezielle Anwendung erfordert, ein besonders großer Abstand, d.h. z.B. mehr als der Durchmesser des Rohrelementes, zwischen den Schlauchstutzen erzielt werden.

Die Erfindung kann auch vorsehen, dass bei zumindest einem der Schlauchstutzen, bevorzugt bei beiden von zwei Schlauchstutzen jeweils ein Mantelflächenbereich des Schlauchstutzens im Bereich der Einmündung in das Innere des Rohrelementes in der Richtung der Erstreckung des jeweiligen Schlauchstutzens tangential in die zylindrische Mantelfläche des Rohrelementes übergeht.

Eine andere Ausführung kann auch vorsehen, dass die Schlauchanschlussstutzen jeweils oder ein gemeinsames Verbindungselement, zu welchem die Schlauchstutzen vereint sind, durch eine einlaufseitige Stirnwand des Rohrelementes, die das Rohrelement einlaufseitig verschließt, in das Innere des Rohrelementes münden. Auch hierdurch kann ebenso eine geringe Bautiefe erzielt werden, z.B. wenn die Stirnwand bis kurz vor oder bis in die Ebene oder über die Ebene der Muffenöffnung des Abwasserrohres hinausgeschoben wird. Das kann z.B. möglich sein, wenn die Länge des Rohrelementes zwischen der Ablauföffnung und der Stirnwand kleiner gleich der maximalen Einstecktiefe einer Muffe des Abwasserrohres ist oder nur unwesentlich größer, bevorzugt kleiner als die doppelte Einstecktiefe.

Die Erfindung kann vorsehen, dass die Schlauchanschlussstutzen, wenn diese separat in das Rohrelement münden, jeweils im Bereich vor ihrer Einmündung in das Innere eine Abwinkelung in die Richtung parallel zur Rohrelementerstreckung aufweisen. Wenn die Schlauchanschlussstutzen zunächst zu einem gemeinsamen Verbindungselement vereint sind, so kann dieses Verbindungselement im Bereich vor seiner Einmündung in das Innere des Rohrelementes eine Abwinkelung in die Richtung parallel zur Rohrelementerstreckung aufweisen. Die Mündungsöffnung ist dann jeweils bevorzugt so groß wie der jeweilige Innendurchmesser.

Es kann auch vorgesehen sein, dass die Schlauchanschlussstutzen oder das gemeinsame Verbindungselement durch einen von der Stirnwand vorspringenden in axialer Richtung der Schlauchanschlussstutzen oder des gemeinsamen Verbindungselementes erstreckenden Bereich mit einem Öffnungsquerschnitt durch die Stirnwand hindurch in das Innere des Rohrelementes einmünden, der größer ist als der jeweilige freie Innenquerschnitt des Schlauchanschlussstutzens oder des gemeinsamen Verbindungselementes an dessen einlaufseitigen Öffnung.

Eine die vorgenannten Ausführungen vereinende Variante kann auch vorsehen, dass die Schlauchanschlussstutzen oder des gemeinsamen Verbindungselement sowohl durch eine einlaufseitige Stirnwand des Rohrelementes, die das Rohrelement einlaufseitig verschließt, als auch durch die zylindrische Mantelfläche des Rohrelementes hindurch in das Innere des Rohrelementes münden, insbesondere wobei die Mündung der jeweiligen Schlauchanschlussstutzen oder des gemeinsamen Verbindungselementes die umlaufende Verbindungskante zwischen der Mantelfläche und der Stirnwand durchbricht.

Bei sämtlichen möglichen Ausführungen können ergänzende Weiterbildungen vorgesehen sein, die nachfolgend beschrieben werden.

Z.B. kann eine Stirnwand des Rohrelementes, die das Rohrelement einlaufseitig verschließt, mit einer Abrundung, insbesondere mit einem Radius größer 5mm, in die zylindrische Mantelfläche des Rohrelementes übergehen.

Eine einlaufseitige Stirnwand des Rohrelementes, die das Rohrelement einlaufseitig verschließt, kann auch in wenigstens zwei plane Stirnwandbereiche unterteilt sein, die in einem Winkel zueinander, insbesondere von 45 Grad, orientiert sind.

Eine Ausführung kann weiterhin vorsehen, dass außen auf der zylindrischen Mantelfläche des Rohrelementes, insbesondere in der Umfangsrichtung des Rohrelementes erstreckt, ein Anschlagelement angeordnet ist, mit welchem die Einstecktiefe des Rohrelementes in ein Abwasserrohr begrenzt ist, z.B. dadurch, dass dieses beim Einstecken an der äußeren Muffenkante des Abwasserrohres anschlägt.

Es kann auch vorgesehen sein, dass im Inneren des Rohrelementes zwischen den Mündungsöffnungen der Schlauchanschlussstutzen eine Trennwand angeordnet ist. Eine solche kann beispielsweise in einer ersten Richtung in der Richtung der Rohrelementerstreckung erstreckt sein und in einer zweiten Richtung in radialer Richtung des Rohrelementes erstreckt sein, bevorzugt wobei die Trennwand innenseitig mit der Stirnwand verbunden ist, welche das Rohrelement einlaufseitig verschließt. Eine solche Trennwand kann die Abwasserströme die aus dem beiden Schlauchanschlussstutzen in das Rohrelementinnere münden trennen, zumindest über die Länge der Trennwand in der Erstreckungsrichtung des Rohrelementes. Abwasser von einem Gerät kann so nicht direkt in ein anderes Gerät hinüberfließen.

Eine Ausführung kann auch vorsehen, dass in dem Rohrelement ein Siphon realisiert ist. Die Erfindung kann dafür vorsehen, dass zwei beabstandete Wänden von einem ersten Bereich der inneren Mantelfläche ins Innere vorspringen, in deren Zwischenbereich eine von einem gegenüberliegenden Bereich der Mantelfläche vorspringende Wand eintaucht.

Die Erfindung wird anhand der nachfolgenden Figuren erläutert.

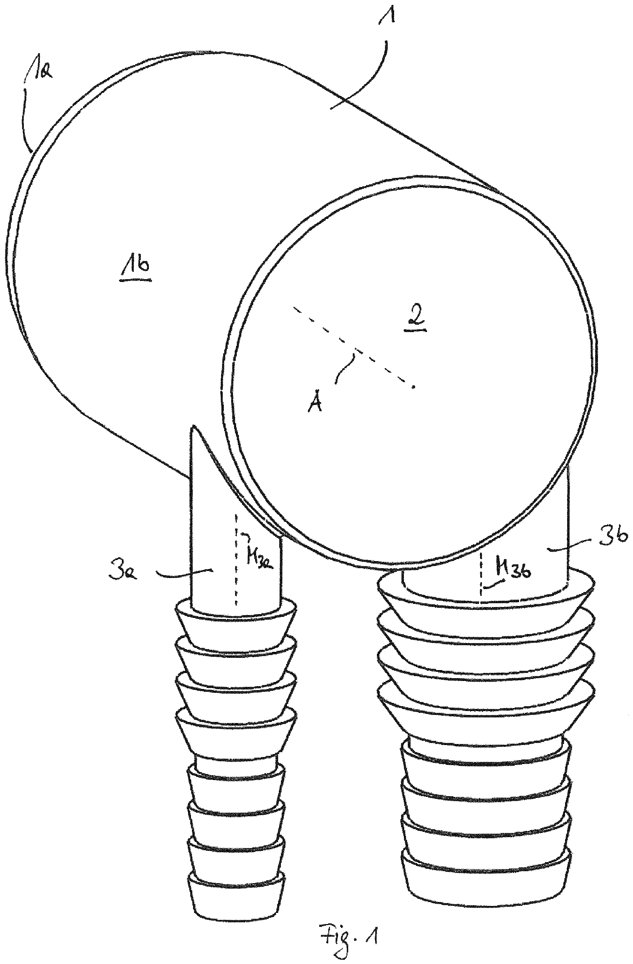

Figur 1 zeigt ein erfindungsgemäßes Abwasserrohranschlussstück mit einem Rohrelement 1, das einen an das anzuschließende, hier nicht gezeigte Abwasserrohr angepassten Rohranschluss 1a aufweist, der hier in einfacher Konstruktion als offener Rohrstutzen 1a ausgeführt ist. Dieser kann z.B. in eine Muffe des Abwasserrohres eingeschobene werden, wie es z.B. von den sogenannten HT-Rohren bekannt ist. Ein bevorzugter Rohrdurchmesser des Rohrelementes liegt bei der Nennweite DN50 oder DN40.

Einlaufseitig ist hier das Rohrelement 1 mit einer Stirnwand 2 verschlossen. Bei der gezeigten Ausführung sind zwei Schlauchanschlussstutzen 3a und 3b vorgesehen, die hier für verschiedene Schlauchdurchmesser konfiguriert sind. Hier sind diese parallel zueinander, in gleicher Richtung erstreckt und liegen weiterhin zur Mittenachse A bzw. Erstreckungsrichtung des Rohrelementes 1 senkrecht. Sie münden durch die zylindrische Mantelfläche 1b des Rohrelementes 1 jeweils separat in das Innere des Rohrelementes 1. Wird somit ein solches Abwasserrohranschlussstück in einer Richtung senkrecht zu einer Wand in eine Muffe eines Abwasserrohres eingesteckt, so verlaufen die Schlauchanschlussstutzen 3a, 3b parallel zur Wand, wodurch eine sehr geringe Bautiefe erschlossen wird. Die Mittenachsen M3a und M3b der Schlauchanschlussstutzen 3a und 3b sind parallel und schneiden beide die Mittenachse A des Rohrelementes 1 nicht, sondern sind darum herum angeordnet.

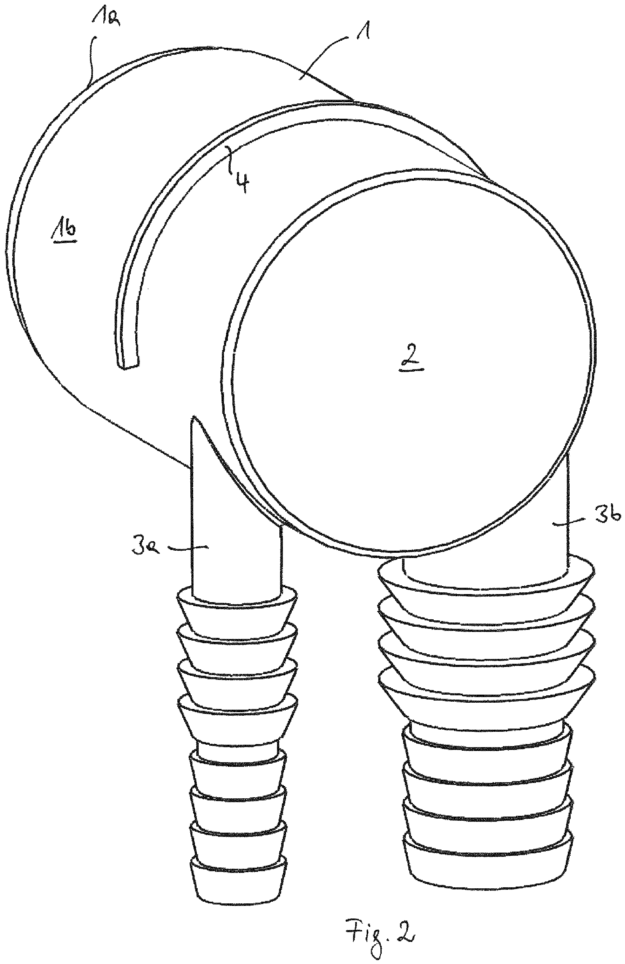

In der Figur 2 ist die Ausführung der Figur 1 um einen Anschlag 4 ergänzt, der sich bereichsweise in Umfangsrichtung um das Rohrelement 1 erstreckt und die Einstecktiefe begrenzt.

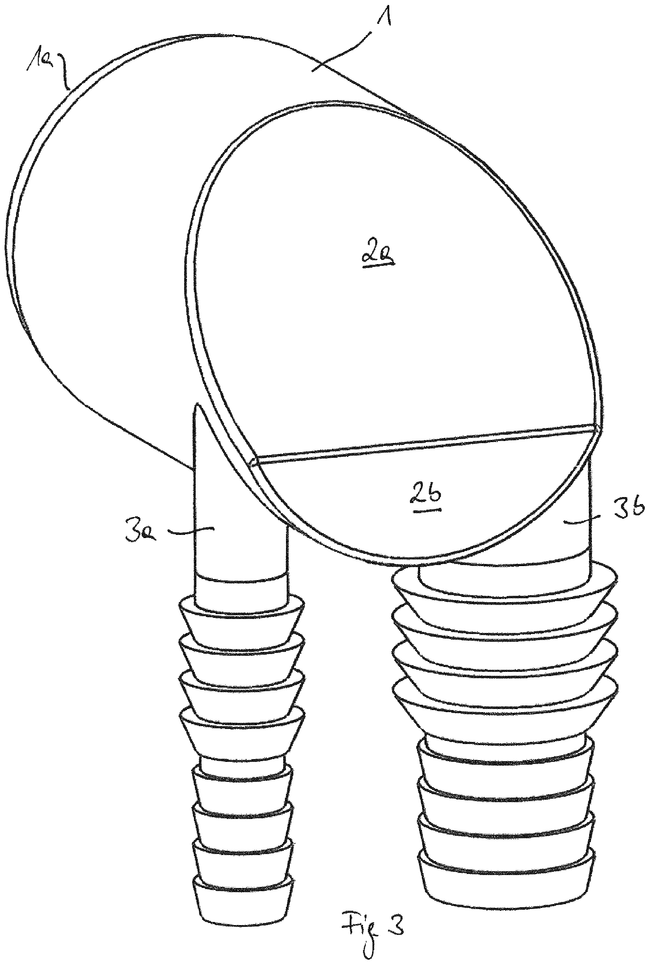

Die Ausführung der Figur 3 ist gegenüber Figur 1 insoweit abgewandelt, als dass die Stirnwand 2 in zwei Teilflächen 2a und 2b unterteilt ist, die in einem Winkel ungleich Null Grad, z.B. 45 Grad zueinander liegen.

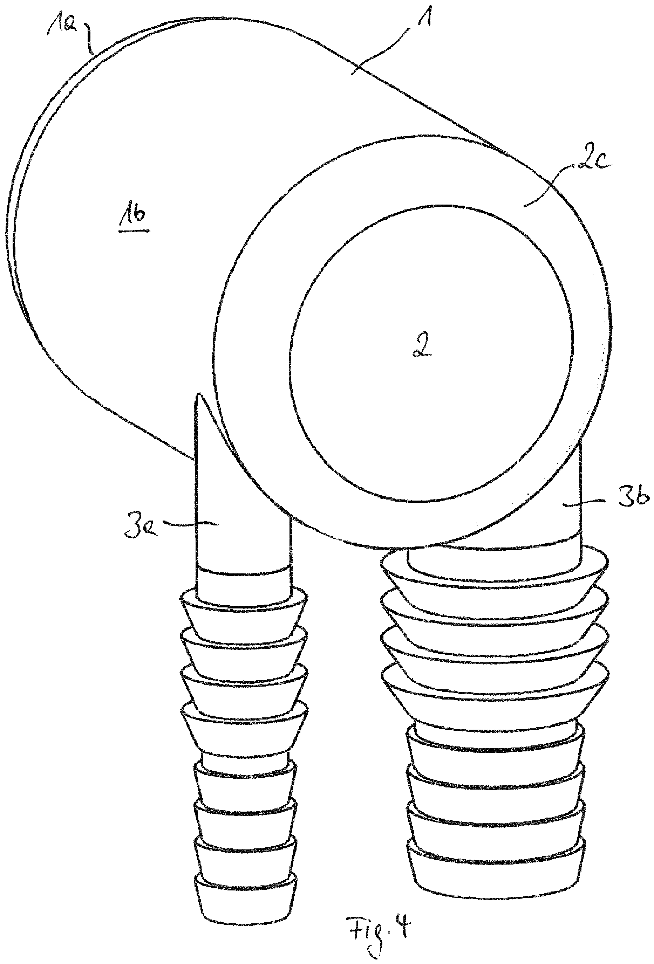

Die Ausführung der Figur 4 zeigt eine Stirnwand 2, die mit einem gerundeten Bereich 2c in die äußere Mantelfläche 1b des Rohrelementes 1 übergeht.

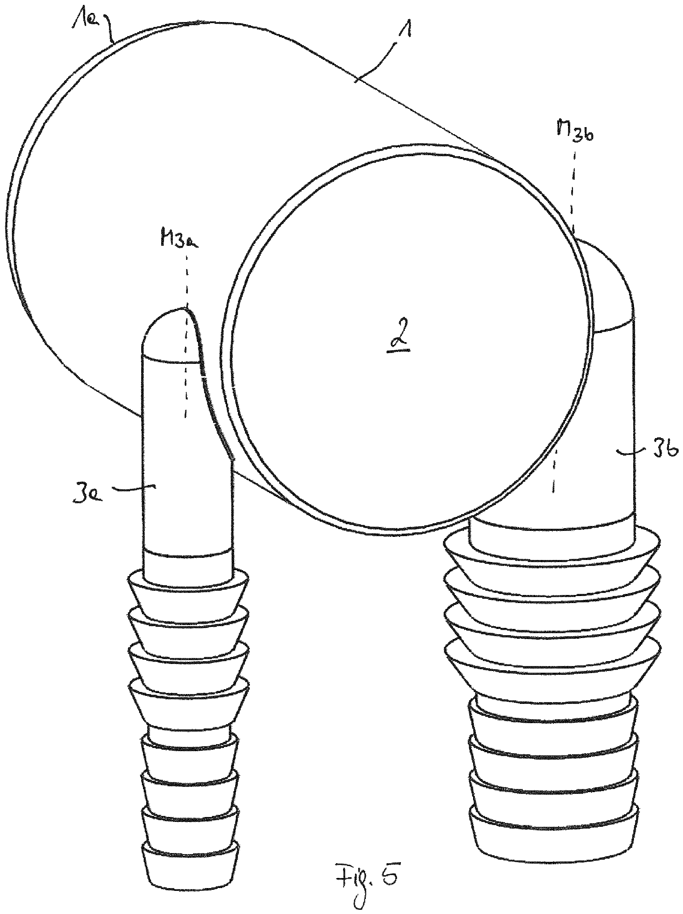

Bei der Figur 5 sind die Schlauchanschlussstutzen 3a und 3b so weit beabstandet, dass deren Mittenachsen M3a und M3b einen Abstand aufweisen, der hier gleich dem Außendurchmesser des Rohrelementes 1 ist. Eine nicht gezeigte Ausführung kann auch vorsehen, den Abstand zwischen den Mittenachsen M3a und M3b größer als den Außendurchmesser des Rohrelementes 1 auszugestalten.

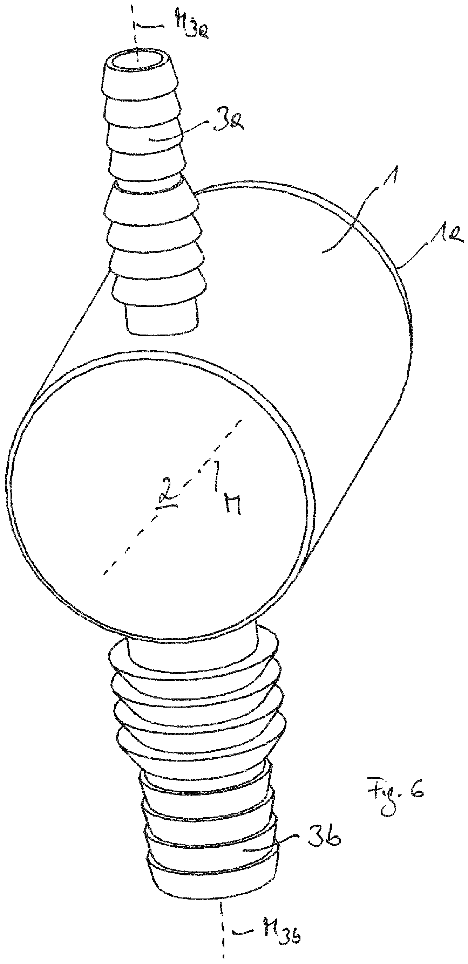

Bei der Figur 6 sind die Schlauchstutzen 3a und 3b ebenso parallel zueinander angeordnete, münden separat in das Rohrelement 1 und erstrecken sich aber in entgegengesetzte Richtung. Die Mittenachsen M3a und M3b schneiden bevorzugt jeweils die Mittenachse M des Rohrelementes 1.

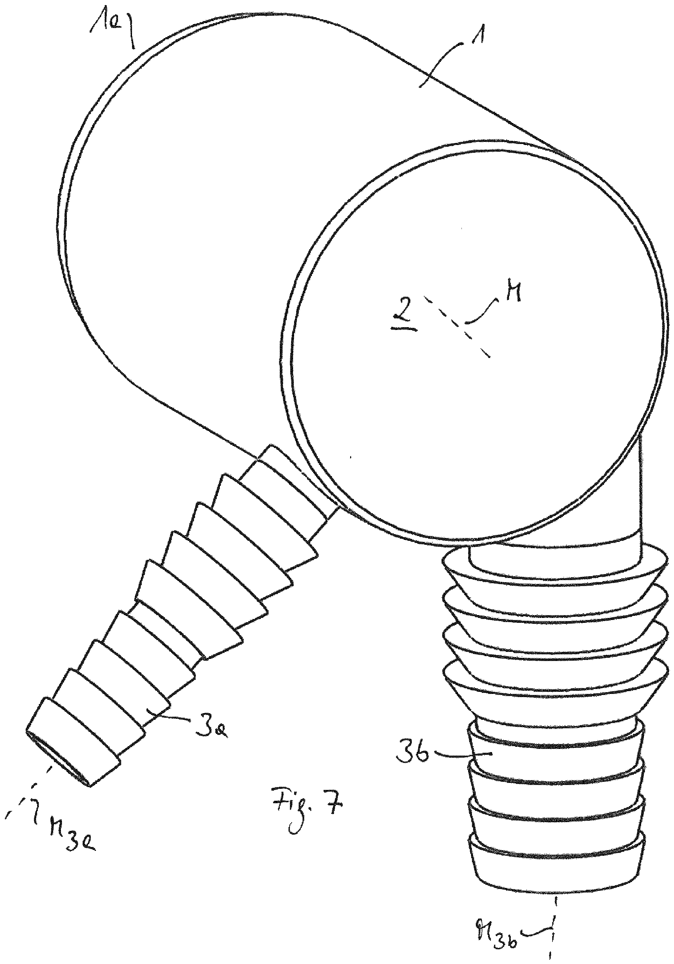

Bei der Ausführung der Figur 7 sind die Schlauchanschlussstutzen 3a und 3b bzgl. ihrer Mittenachsen M3a und M3b senkrecht zur Mittenachse M des Rohrelementes 1 und weiterhin sind die Mittenachsen M3a und M3b der Stutzen nicht parallel zueinander. Hier kann es vorgesehen sein, dass nur eine der Mittenachsen, z.B. M3a die Mittenachse M des Rohrelements 1 schneidet.

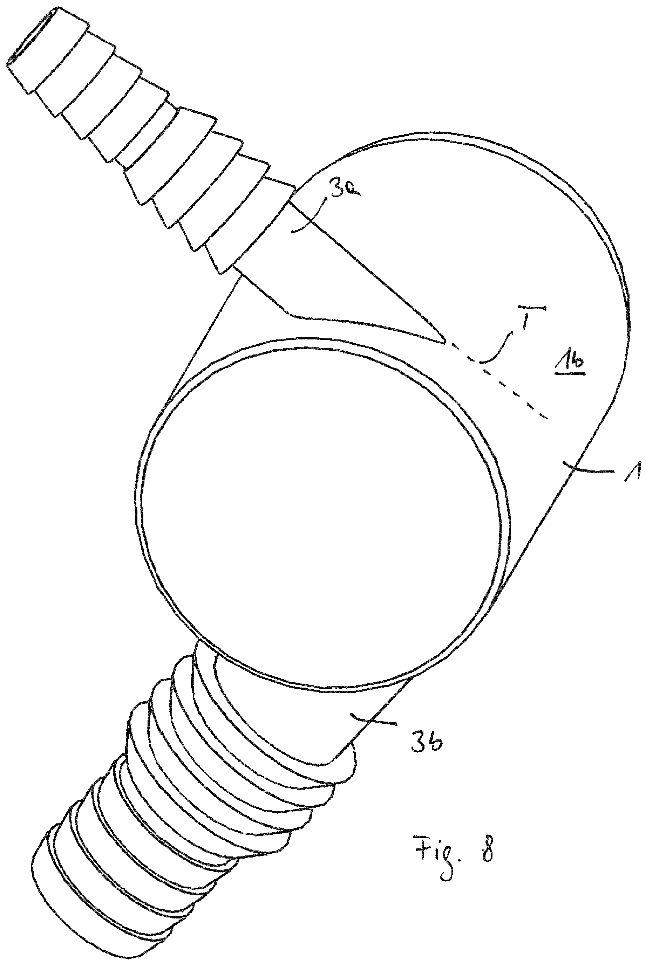

Bei der Figur 8 ist der Winkel zwischen den Schlauchanschlussstutzen 3a und 3b größer gewählt als bei der Figur 7, z.B. zu 90 Grad. Weiterhin geht die Mantelfläche des Stutzen 3a in der Richtung seiner Erstreckung tangential, d.h. im Verlauf der Tangenten T in die Mantelfläche 1b des Rohrelementes 1 über. Dies kann beim Stutzen 3b ebenso vorgesehen sein.

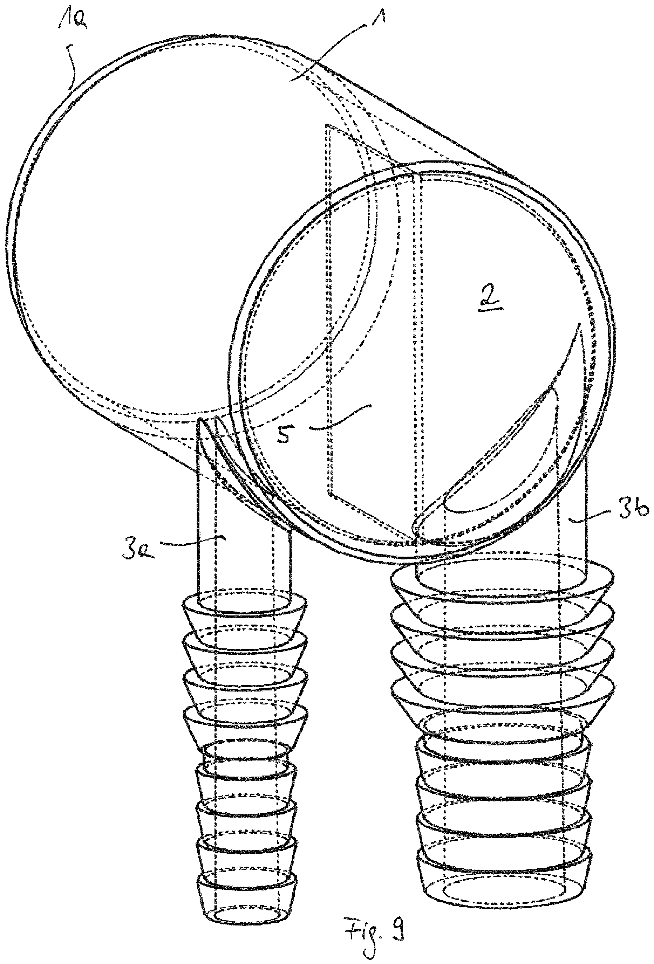

Die Figur 9 zeigt eine Schnittansicht der Ausführung von Figur 1 bei welcher erkennbar ist, dass im Inneren des Rohrelementes 1 eine Trennwand 5 vorgesehen ist. Dies verhindert das direkte Überließen von Wasser zwischen den Schlauchanschlussstutzen.3a und 3b. Die Trennwand 5 grenzt hier direkt innen an die Stirnwand 2 und ist bevorzugt mit dieser verbunden.

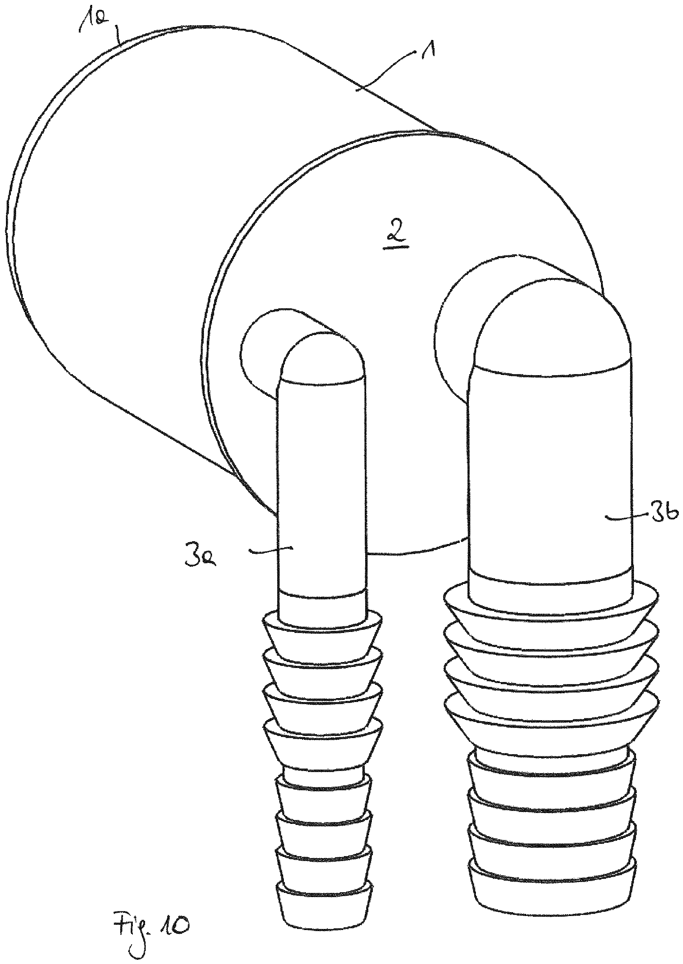

Figur 10 zeigt eine zu den vorherigen Figuren alternative Ausführung, bei der die Schlauchanschlussstutzen 3a und 3b durch die Stirnwand 2 hindurch jeweils separat in das Innere des Rohrelementes 1 einmünden. Hierfür sind die Stutzen 3a und 3b in dieser Ausführung kurz vor der Einmündung um 90 Grad abgewinkelt. Im Einmündungsbereich erstrecken sich die Stutzen 3a und 3b somit in der Richtung des Rohrelementes 1. Der Mündungsquerschnitt entspricht bevorzugt dem Innenquerschnitt des jeweiligen Stutzen 3a/3b.

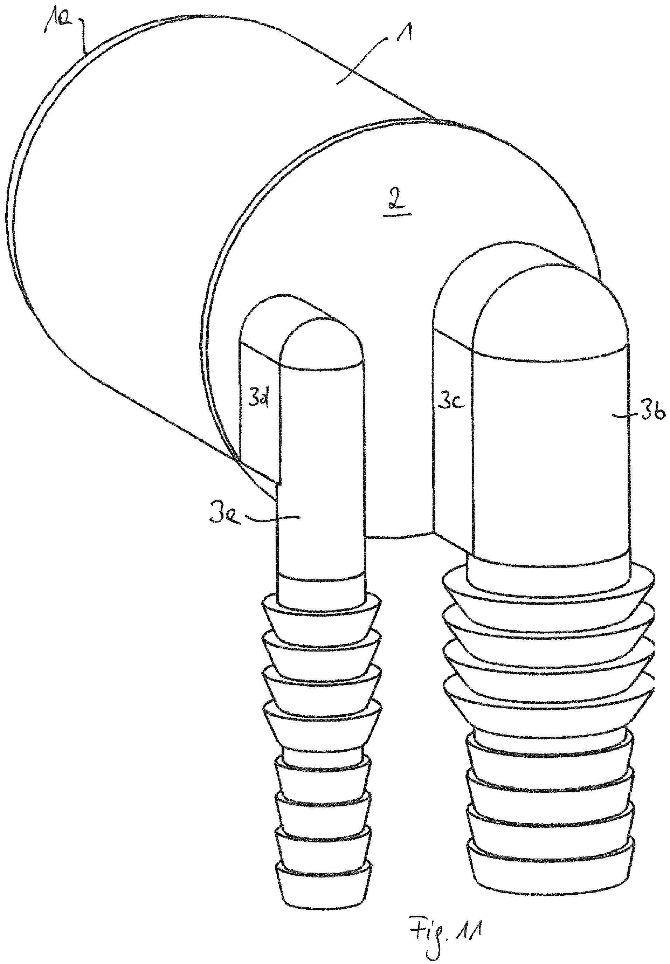

Bei der Figur 11 ist in Abwandlung zur Figur 10 vorgesehen, dass die Schlauchanschlussstutzen 3a und 3b jeweils durch einen von der Stirnwand 2 vorspringenden in axialer Richtung der Schlauchanschlussstutzen 3a/3b sich erstreckenden Bereich 3c/3d durch die Stirnwand 2 hindurch in das Innere des Rohrelementes 1 einmünden. Hierdurch kann der Öffnungsquerschnitt der Einmündung größer gewählt werden als der jeweilige freie Innenquerschnitt des Schlauchanschlussstutzens 3a / 3b an dessen einlaufseitigen Öffnung.

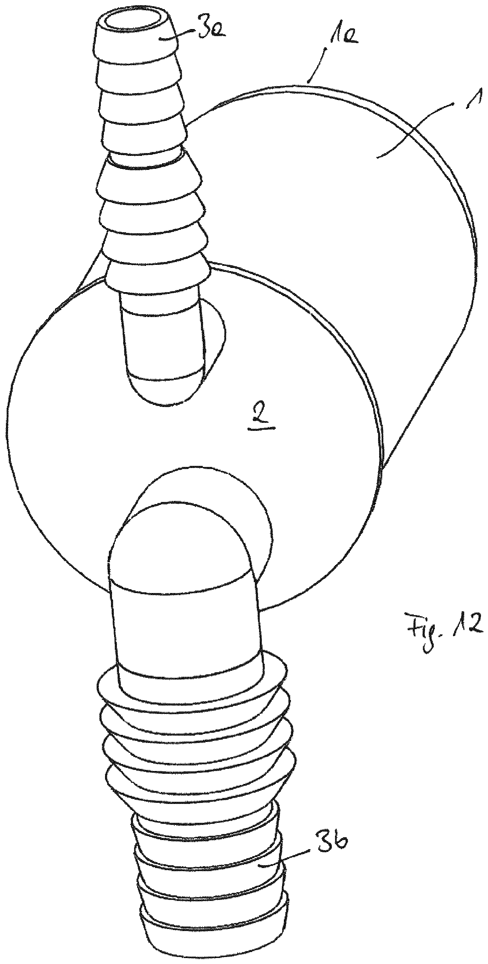

Figur 12 zeigt eine zur Figur 6 analoge Ausführung mit entgegengesetzt verlaufenden Schlauchanschlussstutzen 3a, 3b, die hier aber abgewinkelt durch die Stirnwand 2 in das Rohrelement 1 münden.

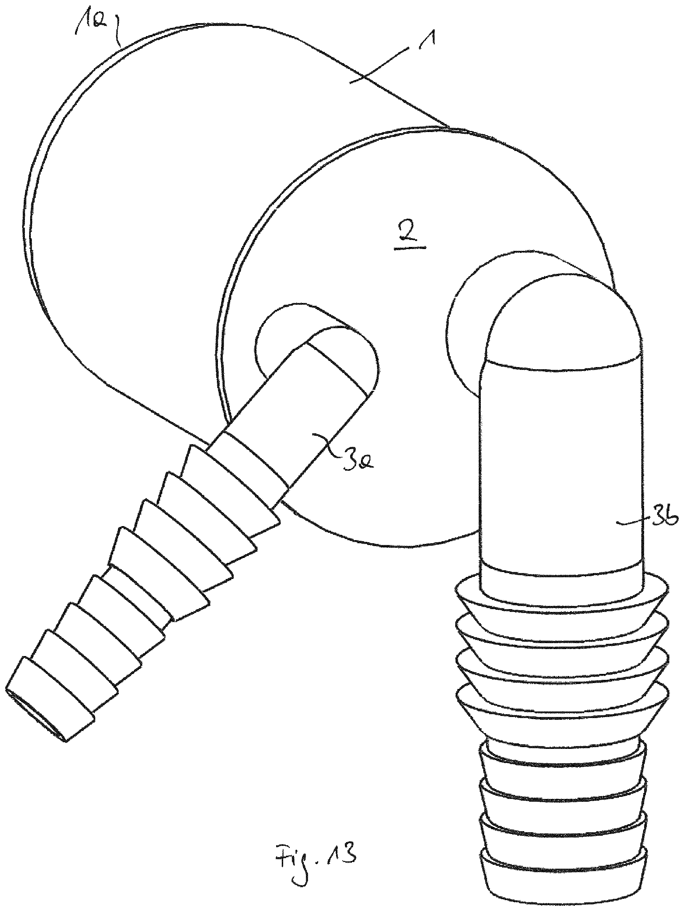

Figur 13 zeigt eine zur Figur 7 analoge Ausführung mit Einmündung durch die Stirnwand 2 statt durch die Mantelfläche 1b des Rohrelementes 1.

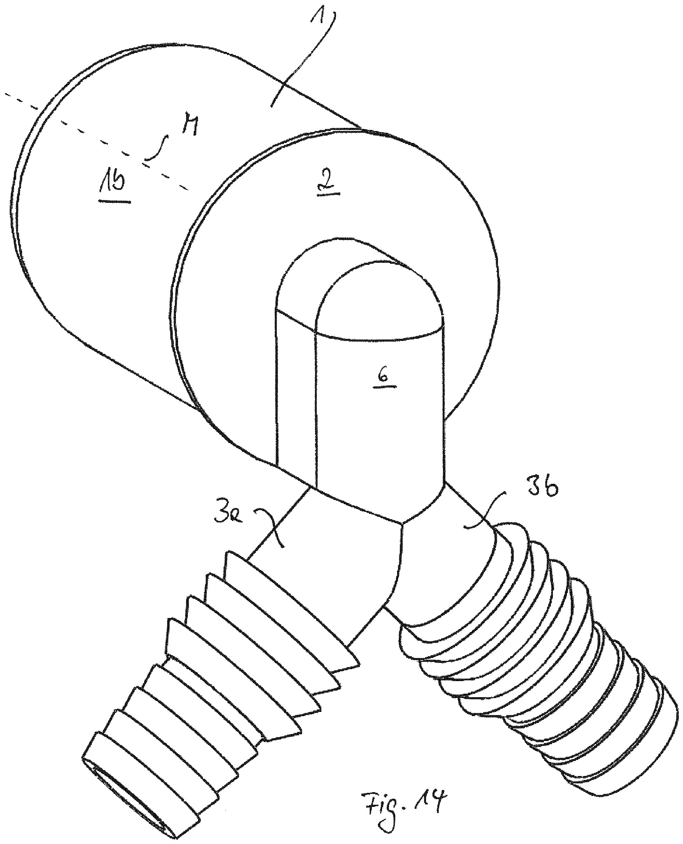

Figur 14 zeigt eine weitere Ausführung, in welcher die Schlauchanschlussstutzen 3a, 3b nicht separat in das Rohrelement 1 einmünden, wie bei allen anderen Figuren 1 bis 13. Vielmehr sind hier die Schlauchanschlussstutzen 3a und 3b zunächst vor der Einmündung zu einem gemeinsamen Verbindungselement 6 vereint. Das gemeinsame Verbindungselement 6 mündet sodann in dieser Ausführung durch die Stirnfläche 2 in das Rohrelement. Hier sind die Schlauchanschlussstutzen 3a, 3b und das Verbindungselement 6 mit ihren jeweiligen Erstreckungsrichtungen senkrecht zur Mittenachse M des Rohrelementes 1 erstreckt.

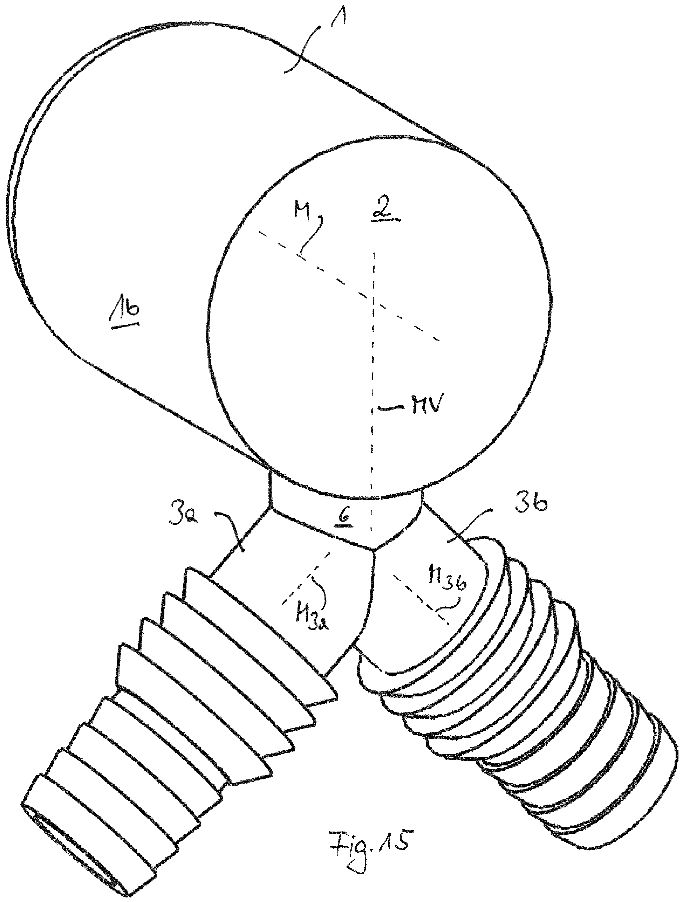

Figur 15 zeigt eine weitere Ausführung gemäß welcher die Schlauchstutzen 3a, 3b zunächst zu einem Verbindungselement 6 vereinigt sind und sodann das Verbindungselement 6 über die Mantelfläche 1b des Rohrelementes 1 in dessen Inneres einmündet. Hierbei ist das Verbindungselement 6 radial zum Rohrelement orientiert. Bevorzugt kann die Mittenachse MV des Verbindungselementes 6 die Mittenachse M des Rohrelementes 1 schneiden. Die Schlauchstutzen 3a und 3b bilden mit dem Verbindungselement 6 eine Y-Konfiguration, wie auch bei Figur 14, wobei die Mittenachsen der Schlauchstutzen 3a, 3b und der Verbindungselementes 6 zur Mittenachse M des Rohrelementes senkrecht orientiert sind.

Alle Figuren zeigen Schlauchanschlussstutzen 3a, 3b für unterschiedliche Schlauchdurchmesser. Diese können aber ebenso gleich sein.

## Patentansprüche

1. Abwasserrohranschlußstück für den gleichzeitigen Anschluss von wenigstens zwei, bevorzugt genau zwei Abwasser führenden Geräten an dasselbe Abwasserrohr umfassend ein Rohrelement (1), welches ablaufseitig einen an das anzuschließende Abwasserrohr angepassten Rohranschluss aufweist, insbesondere einen Rohrstutzen aufweist, der in ein Muffenende eines Abwasserrohres einsteckbar ist, und welches einlaufseitig wenigstens zwei, bevorzugt genau zwei Schlauchanschlussstutzen (3a, 3b) aufweist, insbesondere für verschiedene Schlauchdurchmesser, , **dadurch gekennzeichnet, dass** die Längserstreckungsrichtung (M3a, M3b) aller Schlauchanschlussstutzen (3a, 3b), insbesondere der genau zwei Schlauchanschlussstutzen (3a, 3b), jeweils zumindest im Wesentlichen, insbesondere genau senkrecht zur Rohrerstreckungsachse (M) des Rohrelementes (1) ausgerichtet ist.

2. Abwasserrohranschlussstück nach Anspruch 1, **dadurch gekennzeichnet, dass** die Schlauchanschlussstutzen (3a, 3b)
a. jeweils separat in das Innere des Rohrelementes (1) münden, oder
b. zu einem gemeinsamen Verbindungselement (6) zusammengefasst sind und das gemeinsame Verbindungselement (6) in das Innere des Rohrelementes (1) mündet.

3. Abwasserrohranschlussstück nach einem der vorherigen Ansprüche, **dadurch gekennzeichnet, dass** die Längserstreckungsrichtungen (M3a, M3b) der Schlauchanschlussstutzen (3a, 3b)
a. parallel zueinander orientiert sind, insbesondere wobei sich die Schlauchanschlussstutzen (3a, 3b) vom Rohrelement (1) in dieselbe Richtung oder zwei Schlauchanschlussstutzen (3a, 3b) vom Rohrelement (1) in entgegengesetzte Richtungen wegerstrecken, oder
b. die Längserstreckungsrichtungen (M3a, M3b) der Schlauchanschlussstutzen (3, 3b), insbesondere von genau zwei Schlauchanschlussstutzen (3a, 3b) nicht-parallel zueinander orientiert sind, insbesondere in einem Winkel zueinander von kleiner gleich 90 Grad.

4. Abwasserrohranschlussstück nach einem der vorherigen Ansprüche, **dadurch gekennzeichnet, dass** die Schlauchanschlussstutzen (3a, 3b) jeweils oder das gemeinsame Verbindungselement (6), zu welchem die Schlauchstutzen (3a, 3b) vereint sind, durch die zylindrische Mantelfläche (1b) des Rohrelementes (1) hindurch in das Innere des Rohrelementes (1) münden, insbesondere so, dass die Schlauchstutzen (3a, 3b) und besonders bevorzugt auch daran montierte Schläuche vollständig hinter einer Stirnwand (2) des Abwasserrohranschlussstücks zurückstehen, die das Rohrelement (1) einlaufseitig verschließt.

5. Abwasserrohranschlussstück nach einem der vorherigen Ansprüche, **dadurch gekennzeichnet, dass** die Mittenachsen (M3a, M3b) der Schlauchanschlussstutzen (3a, 3b) von einer einlaufseitigen Stirnwand (2) des Rohrelementes (1), die das Rohrelement (1) einlaufseitig verschließt, unterschiedlich beabstandet sind, insbesondere wobei die unterschiedliche Beabstandung so gewählt ist, dass die äußeren vom ablaufseitigen Ende des Rohrelementes (1) abgewandeten Mantelflächen von auf die Schlauchstutzen aufgeschobenen Schläuchen zumindest im Wesentlichen in derselben Ebene liegen.

6. Abwasserrohranschlussstück nach einem der vorherigen Ansprüche, **dadurch gekennzeichnet, dass** die vom Rohrelement (1), insbesondere radial nach außen weisenden Mantelflächenbereiche von zwei zueinander parallelen Schlauchstutzen (3a, 3b) im Bereich der Einmündung der Schlauchstutzen (3a, 3b) in das Rohrelement (1) oder im Bereich der Einmündung der Schlauchstutzen (3a, 3b) in ein gemeinsames Verbindungselement (5) einen Abstand aufweisen, der größer ist, als der Durchmesser des Rohrelementes (1), bevorzugt wobei die Mittenachsen (M3a, M3b) von zwei zueinander parallelen Schlauchstutzen (3a, 3b) einen Abstand zueinander aufweisen, der gleich oder größer ist als der Außendurchmesser des Rohrelementes (1).

7. Abwasserrohranschlussstück nach einem der vorherigen Ansprüche, **dadurch gekennzeichnet, dass** bei zumindest einem der Schlauchstutzen (3a), bevorzugt bei beiden von zwei Schlauchstutzen (3a, 3b) jeweils ein Mantelflächenbereich des Schlauchstutzens (3a) im Bereich der Einmündung in das Innere des Rohrelementes (1) in der Richtung der Erstreckung des jeweiligen Schlauchstutzens (3a) tangential in die zylindrische Mantelfläche (1b) des Rohrelementes (1) übergeht.

8. Abwasserrohranschlussstück nach einem der vorherigen Ansprüche, **dadurch gekennzeichnet, dass** die Schlauchanschlussstutzen (3a, 3b) jeweils oder ein gemeinsames Verbindungselement (6), zu welchem die Schlauchstutzen (3a, 3b) vereint sind, durch eine einlaufseitige Stirnwand (2) des Rohrelementes (1), die das Rohrelement (1) einlaufseitig verschließt, in das Innere des Rohrelementes (1) münden, insbesondere wobei die Schlauchanschlussstutzen (3a, 3b) jeweils im Bereich vor ihrer Einmündung in das Innere des Rohrelementes (1) eine Abwinkelung in die Richtung (M) parallel zur Rohrelementerstreckung (M) aufweisen oder das gemeinsame Verbindungselement (6) im Bereich vor seiner Einmündung in das Innere des Rohrelementes (1) eine Abwinkelung in die Richtung parallel zur Rohrelementerstreckung (M) aufweist.

9. Abwasserrohranschlussstück nach einem der vorherigen Ansprüche, **dadurch gekennzeichnet, dass** die Schlauchanschlussstutzen (3a, 3b) oder das gemeinsame Verbindungselement (6) durch einen von der Stirnwand (2) vorspringenden in axialer Richtung der Schlauchanschlussstutzen (3a, 3b) oder des gemeinsamen Verbindungselementes (6) erstreckenden Bereich mit einem Öffnungsquerschnitt durch die Stirnwand (2) hindurch in das Innere des Rohrelementes (1) einmünden, der größer ist als der jeweilige freie Innenquerschnitt des Schlauchanschlussstutzens (3a, 3b) oder des Verbindungselements (6) an dessen einlaufseitigen Öffnung.

10. Abwasserrohranschlussstück nach einem der vorherigen Ansprüche, **dadurch gekennzeichnet, dass** die Schlauchanschlussstutzen (3a, 3b) oder das gemeinsame Verbindungselement (6) sowohl durch eine einlaufseitige Stirnwand (2) des Rohrelementes (1), die das Rohrelement (1) einlaufseitig verschließt, als auch durch die zylindrische Mantelfläche (1b) des Rohrelementes (1) hindurch in das Innere des Rohrelementes (1) münden, insbesondere wobei die Mündung der jeweiligen Schlauchanschlussstutzen (3a, 3b) oder des gemeinsamen Verbindungselementes (6) die umlaufende Verbindungskante zwischen der Mantelfläche (1b) und der Stirnwand (2) durchbricht.

11. Abwasserrohranschlussstück nach einem der vorherigen Ansprüche, **dadurch gekennzeichnet, dass** eine einlaufseitige Stirnwand (2) des Rohrelementes (1), die das Rohrelement (1) einlaufseitig verschließt
a. mit einer Abrundung, insbesondere mit einem Radius größer 5mm, in die zylindrische Mantelfläche (1b) des Rohrelementes (1) übergeht und/oder
b. in wenigstens zwei plane Stirnwandbereiche (2a, 2b) unterteilt ist, die in einem Winkel zueinander, insbesondere von 45 Grad, orientiert sind.

12. Abwasserrohranschlussstück nach einem der vorherigen Ansprüche, **dadurch gekennzeichnet, dass** auf der zylindrischen Mantelfläche (1b) des Rohrelementes (1), insbesondere in der Umfangsrichtung des Rohrelementes (1) erstreckt, ein Anschlagelement (4) angeordnet ist, mit welchen die Einstecktiefe des Rohrelementes (1) in ein Abwasserrohr begrenzt ist.

13. Abwasserrohranschlussstück nach einem der vorherigen Ansprüche, **dadurch gekennzeichnet, dass** im Inneren des Rohrelementes (1) zwischen den Mündungsöffnungen der Schlauchanschlussstutzen (3a, 3b) eine Trennwand (5) angeordnet ist, insbesondere wobei die Trennwand (5) in einer ersten Richtung in der Richtung der Rohrelementerstreckung (M) erstreckt ist und in einer zweiten Richtung in radialer Richtung des Rohrelementes (1) erstreckt ist, bevorzugt wobei die Trennwand (5) innenseitig mit der Stirnwand (2) verbunden ist, welche das Rohrelement (1) einlaufseitig verschließt.
